Europäisches Patentamt

European Patent Office

Office européen des brevets

(19)

(11) **EP 0 592 652 B1**

(12) **EUROPEAN PATENT SPECIFICATION**

(45) Date of publication and mention
of the grant of the patent:
**17.09.1997 Bulletin 1997/38**

(21) Application number: **93911514.3**

(22) Date of filing: **27.04.1993**

(51) Int Cl.⁶: **H04N 13/00**

(86) International application number:
**PCT/ES93/00034**

(87) International publication number:
**WO 93/22879 (11.11.1993 Gazette 1993/27)**

(54) **INTEGRAL VIRTUAL REALITY AND/OR IMAGE RECORDING, PROJECTION-VISUALIZATION SYSTEM**

**INTEGRIERTES SYSTEM ZUR AUFNAHME, PROJEKTION UND ANZEIGE VON BILDERN UND/ODER VIRTUELLEN REALITÄT**

**SYSTEME INTEGRAL D'ENREGISTREMENT, PROJECTION-VISUALISATION D'IMAGES ET/OU REALITE VIRTUELLE**

(84) Designated Contracting States:
**AT BE CH DE DK FR GB GR IE IT LI LU MC NL PT SE**

(30) Priority: **30.04.1992 ES 9200907**

(43) Date of publication of application:
**20.04.1994 Bulletin 1994/16**

(73) Proprietors:
• **J.P. PRODUCCIONES, S.L.**
**46009 Valencia (ES)**
• **DOLZ GARCIA, Ramon**
**E-46001 Valencia (ES)**
• **GADEA PEREZ, José Pablo**
**E-46009 Valencia (ES)**

(72) Inventors:
• **DOLZ GARCIA, Ramón**
**E-46001 Valencia (ES)**

• **GADEA PEREZ, José, Pablo**
**E-46009 Valencia (ES)**

(74) Representative:
**Sanz-Bermell Martinez, Alejandro**
**Játiva, 4**
**46002 Valencia (ES)**

(56) References cited:
**EP-A- 0 479 605         GB-A- 2 187 912**
**US-A- 4 310 849**

• **PATENT ABSTRACTS OF JAPAN vol. 15, no. 196 (P-1203) 21 May 1991 & JP-A-03 048 233 (SONY CORP.) 1 March 1991**
• **PATENT ABSTRACTS OF JAPAN vol. 12, no. 184 (E-614) 28 May 1988 & JP-A-62 289 083 (NIPPON KOGAKU KK NIKON )**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present application relates to an improved integral system for recording, projecting, viewing-hearing images and/or virtual reality.

The technical sector in which this patent is included is that of projections of an audio-visual nature, which attempt to submerge the spectator in the world he is viewing.

Until the present time the possibility of considering surroundings, images and sound, recorded from different positions in accordance with the spectator's point of view has been practically limited to virtual images.

Within this technique, the spectator observes surroundings that the informatics system calculates in accordance with his relative position. When the spectator's relative position changes, the system responds by calculating only the surroundings that correspond to the visual and auditory field of the spectator in this situation.

The problem of these systems lies in latency and refreshment rate.

Latency is understood to mean the time that elapses from when the spectator moves until the informatics system calculates the image corresponding to the new situation. The refreshment rate is the number of images that the system can generate per second. The more realistic one wants the image to be, the more complex and numerous the calculations necessary to generate this, and thus the latency is greater and the refreshment rate is smaller. This means that the spectator undergoes a perceptive lag that considerably spoils the sensation of being immersed in the virtual world created.

With "telepresence" the images, normally stereoscopic, are picked up from the real world, along with the sound. When the spectator modifies his relative position, the system responds by taking in the surroundings that correspond to the new position. These surroundings can be observed and listened to by one or more spectators, but in this case all of them perceive the same.

Statement of the prior state of the art:

Invention patent ES-P9100194 covers a procedure for the projection of images with a monoscopic/stereoscopic effect using projectors of the conventional type. Its inventor is one of the inventors of this application. Also the North American company VPL (Visual Programming Language) has developed a virtual reality system based on images produced by computer methods and perceived by the individual by means of a helmet with a screen which the spectator has in front of him, heard by him through headphones, and felt through gloves. This technique is only used for computerized images. To our knowledge they have not developed the real image. The viewing of this virtual reality does not in fact enable a totally real perception, since the processor does not allow viewing in real time as fast as the spectator may wish in relation to his capacity for searching for the image by turning his head, and the images are not real, but computer generated. The screens for each eye in this helmet are different and so there may be chromatic or synchronic differences. As each eye has a screen the precision of the image is less than if a larger screen for both eyes were built into the screen. IBM has also developed software for this purpose. Macintosh has also made a helmet for informatics virtual reality.

EP-A-0 479 605 for a method and portable device for image production; this has one sole screen, and connections that transmit the image, with a lever for locating the image.

GB-A-2187912 for a stereoscopic video system consisting of an alternative image obtaining system for enabling images to be viewed on a television

JP-A-3048233 for a stereoscopic image recording and projection device, which consists of a system for picking up and recording images and a projection device; the surroundings are recorded slowly, and this does not permanently pick up the 360° visual sphere.

JP-A-62289083 covers a total field camera device, made up of three cameras, that record 360° horizontally and which is monitored on a television; this is not stereoscopic and images cannot be selected.

US-A-4310849 for a stereoscopic video system, made up of two screens that send images to each eye by optical fibre, by means of two different systems, UHF and VHF in each one of the eyes; the image is recorded with two cameras; several spectators can be connected to the same; the visual field cannot be selected.

The object of this invention is to provide a system for recording, transmitting and reproudcing images/sound, such that the fiel of view corresponding to the image presented to a spectator can be selected from a larger field corresponding to the total solid angle covered by the recording means which pick up a scene , and which provides stereoscopic vision and stereophonic sound.

These objects are achieved by a system as claimed in claim 1.

Explanation of the invention:

The total solid angle is the cone of images that the lens picks up. The spectator does not in fact pick up the total area of this solid angle - instead, according to the support used a greater or smaller portion of the same is stored. The part of this scene that the lens is capagle of picking up is what we shall call total solid angle.

A recording system capbable of picking up 360° vertically and 360° horizontally picks up a solid angle of 4 x 3.14 seteradians. In this case this would be the image recorded by the recording system in one sole frame or shot equivalent to a visual sphere, and at a rate of 25 frames per second.

A human observes this scene and can only take in three dimensions a solid angle of approximately 100° of angular diameter. This portion of roughly 100° of the scene will be called visual solid angle.

The sound recording system uses several dierectional microphones spread out to take in the angle of the image, for example, 8 microphones laid out in a star shape for a 360° image. The sound recorded by each microphone is independently recorded on a different sound track, so that in this case 8 tracks would simultaneously be recorded. These can be increased or reduced according to the angle and type of microphones, and thus convey to the spectator the particular sound that pertains to the angle of the image that the spectator is perceiving.

The surroundings are thus made up of the total solid angle and the audio channels.

To record the information any conventionl support that digitally records the information can be used.

This is not a projection system in itselft; what it does is to read the digitalized information of the image and the sound that makes up the scene and to transmit this to the viewing / audio systems that each spectator used, which carries out the transduction of the information transmitted and forms the images and the sound for each spectator, by means of a reader that can be reead the monoscopic information at 25 frames per second, or stereoscopic data at 50 frames per second, which the recording systems picks or picked up, as well as the sound. The transmission of data can be via cable or cordless system, the latter being preferable as it provides each spectator's independence. The transmission system will be called the emission system.

The helmet is the support that enables the spectator to get into the real scene which is picked up by the surroundings recording systems.

This system furthermore allows one to superimpose surroundings generated by computer on these surroundings from the real world.

The viewing/audio system consists of:

* A reception system

  + Cordless signal
  + Signal via cable

* Data processor
* Viewing system

  + Screen
  + Optical system
  + Light shutters

* Audio system
* Head and eye positioning system

The reception system receives the signal picked up by the recording system and transmitted by the emission system. Here there may be two different options:

A. A cordless signal with the reception system transforming the same into a numerical system that can be processed.

B. A signal transmitted via cable, with limitations as regards the number, distribution and mobility of the same. The date processor receives the signal that corresponds to the total solid angle that is picked up by the recording system, and allows the spectator to have access only to the information of the surroundings of interest to him, which corresponds to the visual solid angle of the spectator, who selects this by the position of his head or his eyes, and which calculates what portion of the image and sound the spectator would pick up in each eye from his own viewpoint, filters it to this end, and only sends on to the viewing system those pixels that make up the visual solid angle and ignores the rest of the information contained in the frame. It also includes a level detector in order to correct the inclination of the spectator's head.

Each change of position of the head or the eyes is sent to the processor, that recalculates in real time the portion of the image and sound that the spectator would pick up from his new viewpoint and carries out further filtering so that the spectator receives the image corresponding to his new relative position. It also sends the data processor the values of distance between the eyes and those of eye convergence. The first of these values means that servomechanisms can adjust the optical system to the distance between the eyes of each individual. The spectator thus manages to combine in one sole image the two that reach both his eyes.

Eye convergence is used to calculate the portions of ,the image that the data processor sends to the viewing system from the two frames that make up a stereoscopic pair. This is done so that the spectator does not undergo visual fatigue by trying to focus on objects that lie at distances different to those of the lenses that pick up the real scene.

This is how the spectator has access to the infinite 100º solid angles possible that make up the recorded frame.

The scene to which the spectator has access only depends on the total solid angle that the recording system can record. If for example, we consider a recording system that records a solid angle of 180° vertically and 360° horizontally, the possible visual solid angles to which the spectator has access are spread over a semi-sphere that would have the horizon as a base.

The extreme case is a recording system that picks up a total solid angle of 360° vertically and 360° horizontally.

The filtering of the image is done by digitalizing and dividing into a fixed number of "pixels" that depend on the definition of the recording system used and on the screens of the viewing system.

In a first stage, each one of the pixels that make up the frame is assigned a numerical code, that indicates its relative position in respect of certain coordinate axes. The frame is a numerical sequence that takes in the totality of the pixels and thus the total number of numerical codes, that is, the relative coordinates.

Depending on whether the spectator is to get monoscopic or stereoscopic vision, the recording system picks up 25 or 50 frames per second and the emission system transmits 25 or 50 frames per second, understanding "frame" to mean each visual reading unit made up of the totality of the pixels and the numerical codes that make up the total solid angle.

With monoscopic vision, the processor sends the same image to each eye, but with stereoscopic vision it sends each eye the image corresponding to its own viewpoint.

The viewing system consists of the following items:

+ The screen
* The optical system
* The light shutters

This is where one finds the greatest difference between this helmet and earlier ones known of, which are used with virtual reality systems.

In the latter, the image that each of the spectator's eyes receives is normally formed on two liquid crystal screens. The right eye is thus assigned one screen and the left eye another. The image reaches the ball of the eye by means of an optical-system that enables this to be seen in spite of the fact that the screens are placed at a distance closer than that at which the eye can focus.

The difference between this helmet and those already known of lies in the fact that only one screen is needed. The spectator can perceive a monoscopic or stereoscopic image thanks to the existence and the operation of light shutters placed between the eyes and the screen that generates the image and also due to a higher frequency in the generation of images.

With the new helmet there is only one screen that generates the 25 pairs of frames, thus reaching a frequency of 50 cycles for each eye, that is to say a total of 50 different frames but with a total minimum frequency of 100 cycles per second, bearing in mind the 25 stereoscopic pairs.

The fact that each eye only perceives the images that it should receive is due to an optical system and to the shutters placed between the screen and the eyes. The process is as follows:

The optical system is a set of items that enable both eyes to see the screen, in such a way that the light beam coming from the screen is split into two beams that are projected before the spectators eyes.

To obtain stereoscopic vision the screen alternatively generates the image that corresponds to each eye. Taking the pair of images as a basic unit, of the 25 that are generated per second, each one corresponding to the viewpoint of each eye, we shall call the image corresponding to the right eye RI, and the one for the left eye LI.

The generation system is for example:

LI-RI-LI-RI

or alternatively

RI-LI-RI-LI

... without it mattering which of these is used. When the next couple is projected the cycle is again repeated and this happens 25 times a second, which means that the screen generates 100 ips, 50 of these for the right eye's viewpoint and 50 for the left eye's viewpoint.

According to the image that is being generated, the shutter corresponding to each eye will be open or closed, in such a way that the image only reaches the eye that it should reach. For the previous sequence we can therefore state which shutters will let light through, with LS being the left shutter and RS the right one.

If one should wish to have a monoscopic view, all that has to be done is to synchronize both shutters to either of the images, and the shutters must be synchronized to one of the LI or RI images, even though LI and RI are identical.

The helmet can be fitted with a switch that synchronizes both eyes to either of the images that form the stereoscopic pair. In this way people sensitive to this can obtain monoscopic vision even though at that time the emission system is sending out a stereoscopic signal.

The image formed always by one sole screen means that the size of the same can be greater than on conventional helmets and thus provided with greater definition than on these, and the image for both eyes is identical as regards luminosity and chromatism, and can be located in any position.

The screen should have a proper size to enable the formation of the circular image that corresponds to a visual solid angle.

The helmet also includes the mechanisms required for this to adapt perfectly to the particular physiological characteristics of each spectator, the distance between pupils, and specific optical correction for each eye, both manual and automatic.

The helmet adapts to any of the visual solid angles that are covered in the total solid angle.

Possibilities:

1. The recording system or the informatics system takes in a total solid angle greater than the visual solid angle, but not so great that the head would have to turn at an angle over 180° in order to cover this. One can also observe in two or three dimensions, with the data processor and positioning systmens being required in this case.

2. The recording system picks up a total solid angle greater than the visual one, but the spectator needs to make an angular turn over 180° to cover this. This means that the spectator must be standing or sitting in a rotating chair, so that his head can turn over 180°. One can also view in two or tree dimensions, but in this case the data processor and the positioning systems are required. This system takes in the ones mentioned earlier and can thus be used to view a sequence of images recorded in any of the formats of systems previously mentioned.

The system can be configured in different options:

A. The complete helmet:

This helmet has all the systems fitted.

* Reception system
* Data processor
* Screen
* Optical system
* Light shutters
* Audio system
* Head and eye positioning system

B. This helmet does not have all the systems fitted inside it. Instead the screen is outside the helmet. In this case the helmet would include:

* Reception system
* Data processor
* Optical system
* Light shutters
* Audio system
* Head and eye positioning system

In this option each spectator has a portable screen connected to the helmet by means of the optical system, which means that the screen can be much larger and with greater definition. The data processor, the light shutters and the reception system can be fitted next to the screen, leaving only the audio system, part of the optical system and the head and eye positioning systems inside the helmet. The portable unit sends the image and the sound to the headphones, and receives from these the data regarding the head and eye positioning. In this way the helmet can be much more compact and less heavy.

C. Centralized system

This option is used for a fixed number of spectators. In each spectator's helmet there are the same items as in case B, but the screen, instead of being portable, is found in a centralized system along with the rest of the screens for the other spectators. This is a central unit made up of as many screens, data processors, light shutters and emission / receptions systems as the number of spectators desired. The central unit sends the personalized image and sound to each of the spectators helmets and receives from these the data regarding head and eye position. This is the ideal format for particular aspects such as interactive play of images and/or virtual reality.

In order to make the following explanation clearer, ten sheets of drawings are included, which represent the essence of this invention in thirteen figures.

Figure 1 shows a diagrammatic view of the solid angle that the camera picks up, as well as its format.

Figure 2 shows a view of the total solid angle.

Figure 3 shows a diagrammatic figure that represents an example of the vision in a frame of 360° and vertical angle of 45°.

Figure 4 shows a diagram of the development of the cylinder of 360° of figure 3.

Figure 5 shows a diagram of how the sound is picked up for the 360° frame.

Figure 6 shows a diagram of the view possible for a spectator according to the position his head is in.

Figure 7 shows a diagram of the view possible for a spectator in accordance with a recording at an angle of 180° vertically and 360° on a horizontal plane.

Figure 8 shows a diagram of the view possible for a spectator in accordance with a recording at a vertical angle of 360° and one of 360° on a horizontal plane.

Figure 9 shows a diagram of the digitalization of the screen 360° horizontally and 100° vertically, and its relation to the content observed by the spectator.

Figure 10 shows a diagram of the areas of a frame developed in which the spectator can vary his initial position.

Figure 11 shows a diagram of the system of perception of the images by each eye using a small sized screen fitted into the helmet.

Figure 11a shows a diagram of the system of perception of the images by each eye using a large sized screen fitted outside the helmet.

Figure 12 shows a system of shutting out the image in accordance with the projection for the right hand frames.

Figure 13 is a diagram of the positioning system.

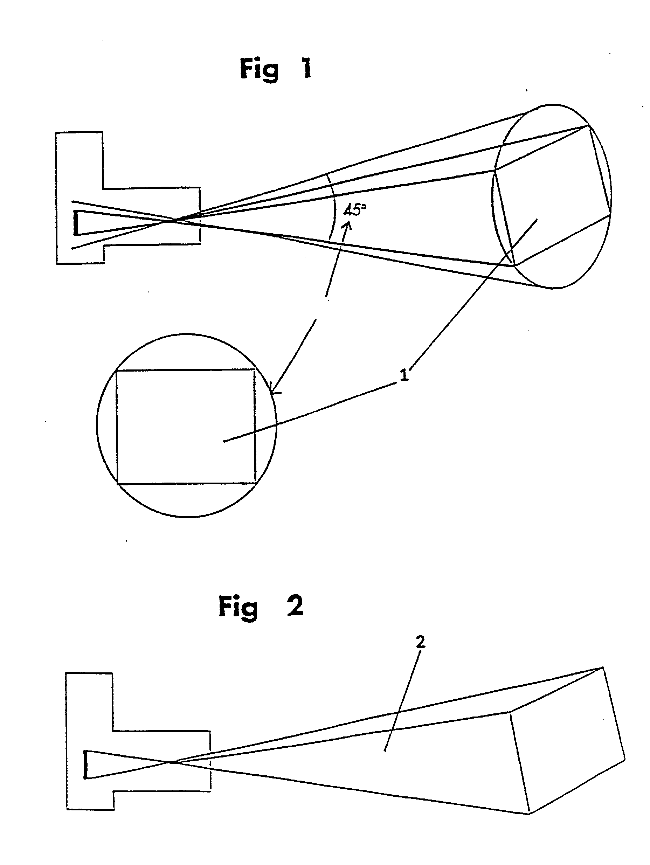

In Figure 1, which shows a diagrammatic view of the solid angle taken by the camera, 1 is the format of the camera and is appreciated as an example of the solid angle, indicated 45°, taken by the lens.

In Figure 2, which shows a view of the total solid angle, 2 indicates the spectrum covered by the camera.

Figure 3, that shows a diagrammatic figure that represents an example of the view of a frame of 360° and vertical angle of 45°, 4 indicates the spectator, who can choose between images 5a and 5c set at opposite points and not simultaneously visible by the same spectator of the screen whose images he chooses, indicated as 6.

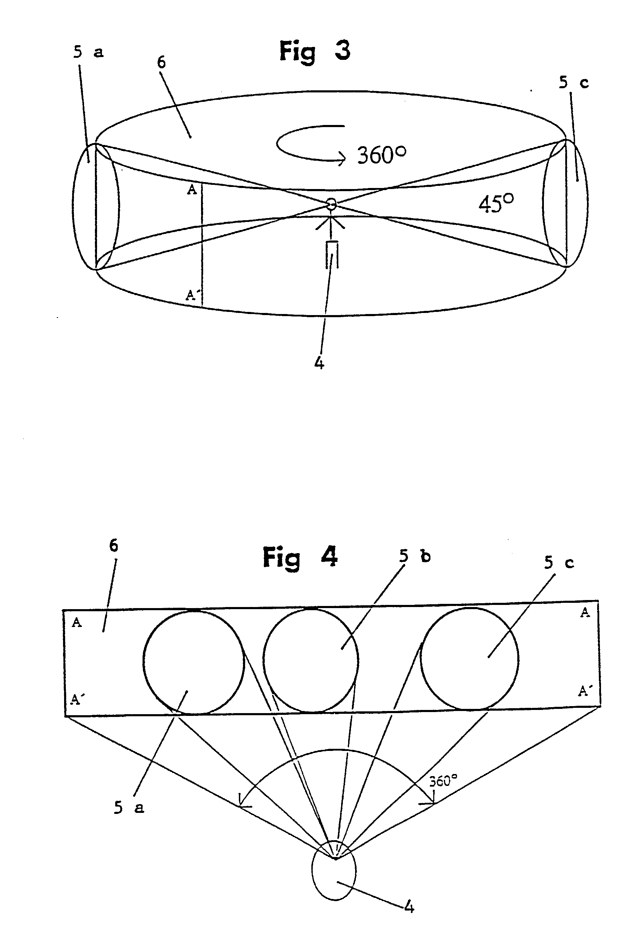

In Figure 4, that shows a diagram of the development of the 360° cylinder in Figure 3, one can appreciate the way spectator 4 is able to observe any of the infinite points of view, for example 5a, 5b and 5c, within the visible spectrum that can be observed by modifying the position of his head or eyes.

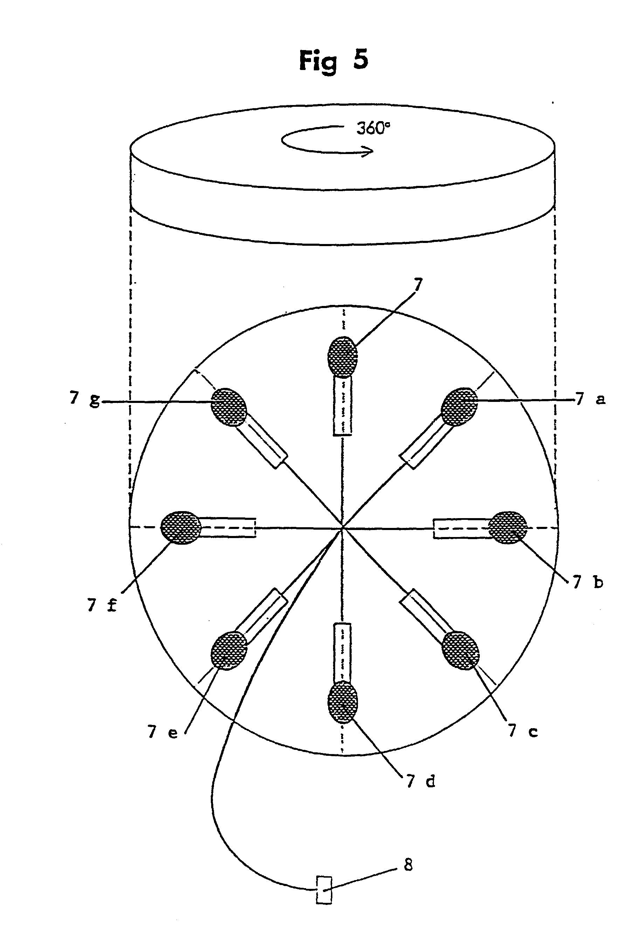

In Figure 5 there is a diagram of the sound take for the 360° frame in which we can see the directional microphones, for example eight of these - 7 a, b, c, d, e, f and g - with which the sound is obtained, whose recording 8 can be selected at the time of the reproduction, in accordance with the image reproduced and the position of the spectator in respect of said image.

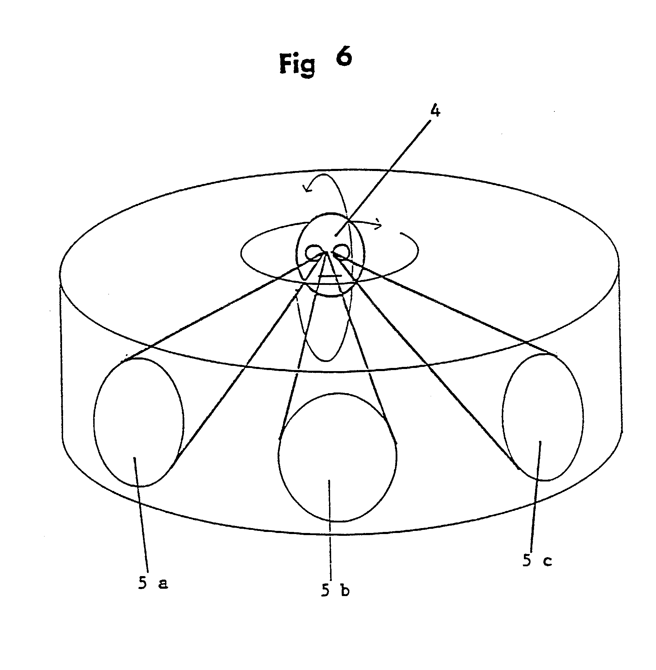

In Figure 6 there is a diagram of a spectator's possible view, according to the position assumed by his head, in a frame in which spectator 4 receives the image in accordance with the position of his head.

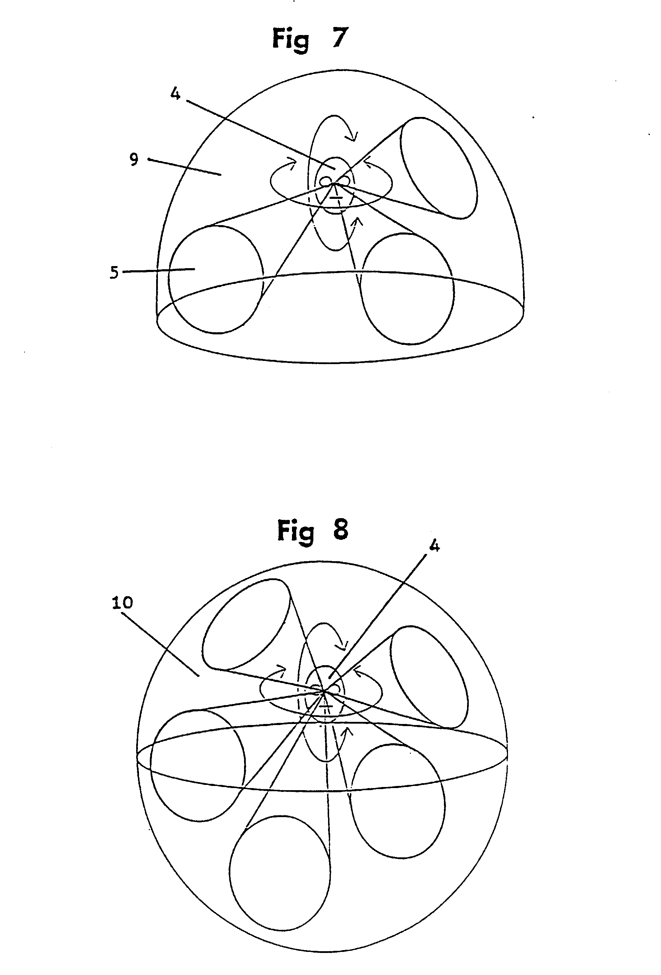

Figure 7 shows a diagram of a spectator's possible view according to a recording of an angle of 180° on a vertical plane and 360° horizontally, by means of which said spectator can pick up an image of the upper semi-sphere surrounding him 9, choosing any of the points of view 5 on which his vision can concentrate.

Figure 8 shows a diagram of a spectator's possible view according to a recording of an angle of 360° on a vertical plane and 360° horizontally, by means of which said spectator can pick up an image of the upper semi-sphere surrounding him 10.

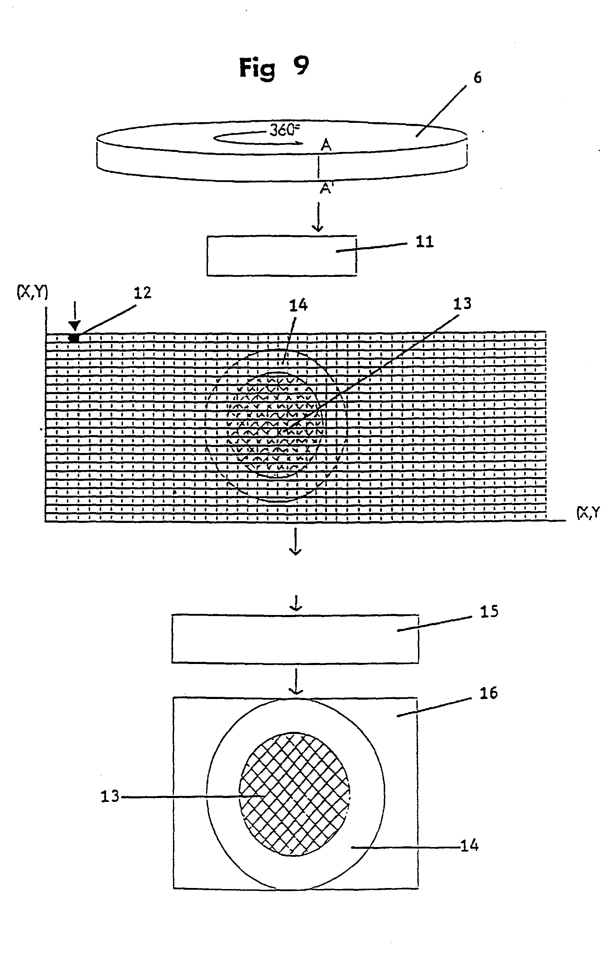

Figure 9 shows a diagram of the digitalization of the screen 360° horizontally and for example 45° vertically, and its relationship to what is observed by the spectator, in which screen 6 is digitalized 11, being analyzed and broken down into pixels 12, with the spectrum visible by both eyes indicated as 13, the spectrum visible by either one of the eyes 14, which is processed 15. As a result of this processing, the spectator only perceives for his point of view the image 13 on screen 16 according to his possible spectrum of vision 14.

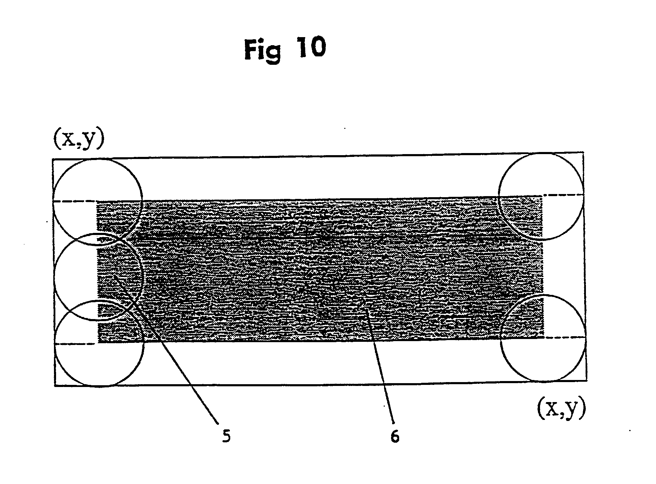

In Figure 10 there is a diagram of the area of a frame made in which the spectator can vary his relative position, bearing in mind that the points of view that are represented diagrammatically such as 5 as appearing at one end are actually complemented by the next part of the frame, since this is circular.

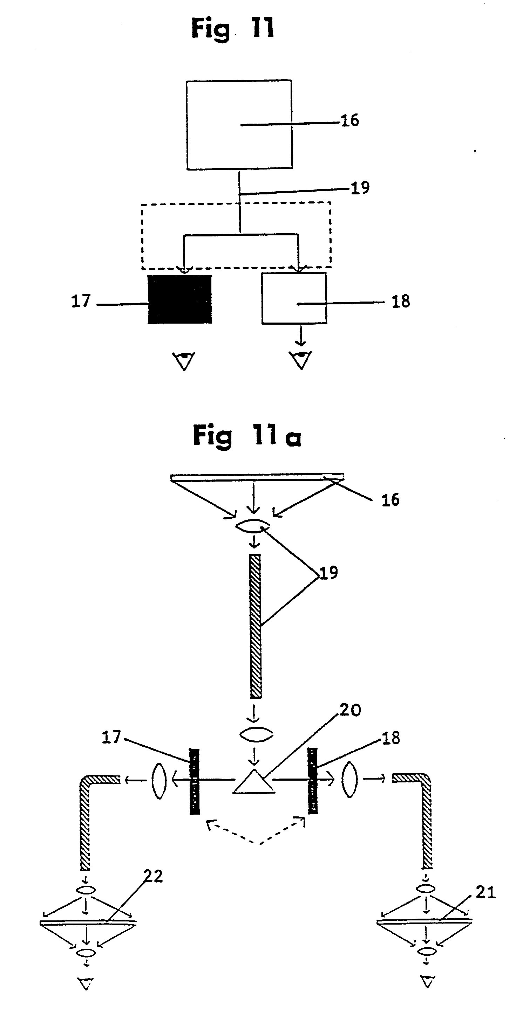

In Figure 11 there is a diagram of the system of perception of the images of each eye using a screen of a relatively small size, indicated 16, and fitted as an integral part of the helmet, in which there is an optical system 19 and light shutters, 17 for the left eye and 18 for the right eye.

Figure 11a shows a diagram of the system of perception of images by each eye using a screen 16 of large size set outside the helmet, which through an image transmission system 19 and one for selecting each eye 20, becomes visible in the small screens 21 and 22 that each spectator has in his helmet, through the light shutters 17 and 18.

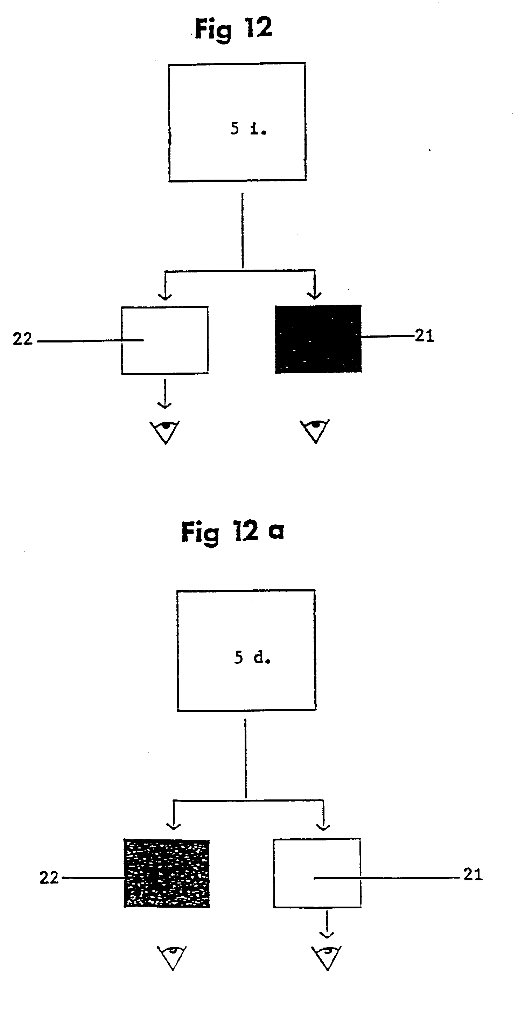

Figure 12 shows a system of shutting out the images in accordance with the projection for the left hand frames, in which 5i indicates the projection of the image for the left eye, in correspondence with the left hand shutter 22 that is open, enabling the viewing of the content of the image projected, whilst the right shutter 21 is closed.

Figure 12a shows a system of shutting out the images in accordance with the projection for the right hand frames, in which 5d indicates the projection of the image for the right eye, in correspondence with the right hand shutter 21 that is open, enabling the viewing of the content of the image projected, whilst the left shutter 22 is closed.

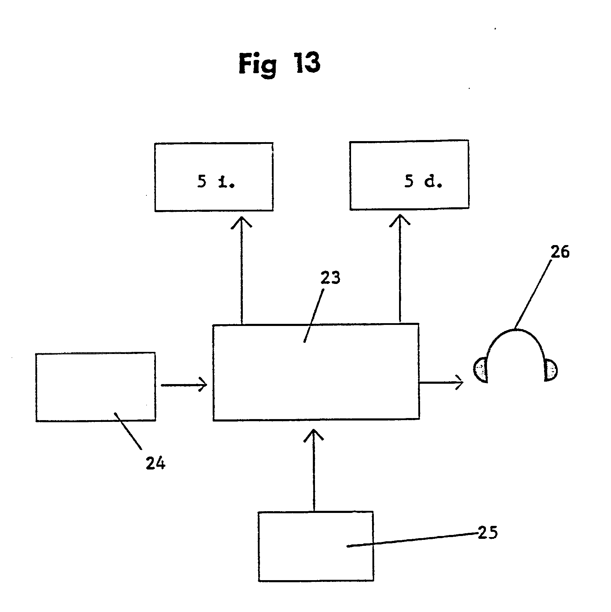

Figure 13 shows a diagram of the positioning system, in which 23 indicates the data processor that receives the information from the positioning system 24, from the reception system 25, and determines the sound that has to reach the headphones 26 and the image that has to be shown on each screen, with 5i corresponding to the left eye and 5d to the right eye.

The operation of the system that this invention uses is amply described in the previous description, in accordance with the possibilities expressed and mentioned throughout this application.

The industrial application of this invention takes in from the recording of films to the projection of these in commercial cinemas in accordance with this new concept that is expressed by the content of this application.

## Claims

1. Integral system for recording, transmitting, projecting, viewing-hearing real images or combinations of real images and virtual reality type images, of the type that projects an image from one point of view for each eye of a spectator in a helmet that has means for viewing images and is fitted with headphones, the system comprising:

   a plurality of receiving means, one for each spectator, recording means for recording the image and comprising at least one camera for recording image frames, each frame corresponding to a total solid angle viewed by said at least one camera covering at least 100 degrees and up to 360 degrees horizontally and vertically, and operating at a minimum rate of 25 frames per second, each frame being digitalised and each digitalised pixel of the image represented by a frame resulting from the digitalisation being assigned a code that indicates the position that it must take in a visual sphere of a spectator in respect of reference coordinates,
   storage means for storing the digitalised pixel values and associated codes,
   transmitting means for transmitting the content of the storage means or the content of the storage means and associated surroundings information representing said virtual reality type of images, and for transmitting sound in audio channels, to each receiving means,

   each receiving means associated to a spectator comprising:

   a receiver (25) for receiving the transmitted image and sound information,
   a helmet associated with a viewing/audio system made up of a head positioner (24) that determines the relative position, in said visual sphere, of the spectator in respect of said tbtal solid angle covered by said cameras, in a way that is independent of any other spectator,
   a processor (23) for filtering the image information received and for mixing audio channel signals received, according to coordinates provided by said head positioner, such that said spectator receives only the visual and sound fields corresponding to his said relative position,
   a system for viewing (16-22) provided with a single screen (16) for generating images, image transmission means (19,20), and a shutter (21,22) that filters the generated images corresponding to each eye, and
   an audio system (26) for reproducing the sound corresponding to said relative position.

2. A system, according to claim 1, characterized in that the sound is recorded by several microphones (7) that determine the pickup over a spectrum of 360°, whose tracks are made in the projection in such a way that in accordance with the viewpoint of the spectator, the emission said sounds is made in a way that coincides with the image, with those that come from the part whose image the spectator is observing being placed frontally.

3. A system, according to claims 1 and 2, characterized in that the helmet for projecting, viewing the images and reproducing the sound comprises:

a head positioner (24) that detects the position of the helmet in respect of the image that is the object of the projection,

an eye positioner that determines, in accordance with the position of the eyes, the selection of the images visible in the zone where these search for the image,

an eye convergence detector that determines the focusing at short and long distances,

a horizontality positioner that makes the projection of the images always vertical, independently of the lateral inclination of the spectator's head,

a voluntary switch for selecting and hearing mono or stereophonic sound, separated from another voluntary mono/stereoscopic image selector

light shutters (17, 18) that determine the selection of images in each of the points of view of each eye transmitted onto said single screen fitted in the helmet, or by means of a system for reception of the images projected onto said single screen and transmitted by optical fibre to each of the spectators;

the field of the image projected (14) being circular and somewhat larger than that of human vision;

the optical system or the one for image transmission being of refraction or reflection type, or performing transmission of images by optical fibre.

4. System, according to claims 1 and 2, characterized in that the helmet has optical correction and adaptation systems for adapting to the spectator's ocular distance.

5. System, according to claim 1, characterized in that the digitalized image is filtered in accordance with a possible mixing with other images generated by computer.

6. System, according to claims 1 and 3, characterized in that the images which are visible (13) are made and/or generated in accordance with each one of the spectator's possible viewpoints, and the inclination and orientation of the helmet.

7. System, according to claims 1 and 3, characterized in that each pair of images, in each second, is reproduced on the screen (16) in the following seqence, with LI being the reproduction of the part observed by the left eye and RI the part observed by the right eye.

| PAIRS (odd) | 1 to 25 | LI-RI-LI-RI |
| PAIRS (even) 24 | 2 to | LI-RI-LI-RI |

and this is viewed by the joint action of the light shutters in accordance with the following sequence, and with LS meaning the left shutter and RS the right shutter:

| PAIRS (odd) 1 to 25 | LI-RI-LI-RI | LS-RS-LS-RS |
| PAIRS (even) 2 to 24 | LI-RI-LI-RI | LS-RS-LS-RS |

8. System, according to claim 3, characterized in that in a possible configuration the helmet has the reception system, the data processor, the screen, the optical system, the light shutters, the audio system and the system for head and eye positioning.

9. System, according to claim 3, characterized in that in a possible configuration the helmet has part of the optical system, the audio system, and the head positioning system, and outside the helmet there is the screen, the reception system, the data processor, the light shutters, all of this equipment joined to the helmet via a connection.

10. System, according to claim 3, characterized in that in a possible configuration the helmet has part of the optical system, the audio system, and the head positioning system, and outside the helmet the central unit is placed, formed by as many screens, data processors, light shutters and emission/reception system as there are possible spectators.

11. System, according to any one of claims 1, 2, 3 and 6, characterized in that the images and the sounds selected and obtained are realized in real time.

**Patentansprüche**

1. Ein Integral-System zum Aufzeichnen, Senden, Projizieren, Sehen und Hören von realen Bildern oder Kombinationen solcher mit Virtual-Reality-Bildern, wobei ein Bild von einem Blickpunkt für jedes Auge eines Betrachters projiziert wird, in einem Helm, der mit den Vorrichtungen für die Bildbetrachtung und mit Kopfhörern ausgestattet ist. Das System besteht aus:

   einer Vielzahl von Empfangsvorrichtungen, einer pro Betrachter, Bildaufzeichnungsvorrichtungen, ausgerüstet mit mindestens einer Kamera zur Aufzeichnung von Bildsequenzen, wobei jede Sequenz einen gesamten, von der genannten mindestens 1 Kamera aufgenommenen Raumwinkel darstellt, der zumindest 100 Grad und bis zu 360 Grad horizontal und vertikal umfasst, und mit einer Mindestgeschwindigkeit von 25 Bildern pro Sekunde arbeitet, wobei jedes Bild digitalisiert und jedem digitalisierten Pixel des Bildes, dargestellt durch eine sich aus der Digitalisierung ergebende Sequenz, ein Code zugeordnet wird, der die erforderliche Position in dem Sehkreis des Betrachters hinsichtlich der Bezugskoordinaten angibt,
   Speicher zum Speichern der digitalisierten Pixelwerte und zugeordneten Codes,
   Übertragungsmittel zum Übertragen des Speicherinhalts oder des Speicherinhalts und zugeordneter Umfeldinformation, die die genannten Virtual-Reality-Bilder darstellt, und Mittel für die Tonübermittlung in Audiokanälen zu jeder Empfangsstation,

   wobei die einem Betrachter zugeordnete Empfangsstation folgendes umfasst:

   einen Empfänger (25) zum Empfang der übertragenen Bild- und Toninformation,
   einen Helm, der an ein Video/Audio-System angeschlossen ist, welches aus einem Positioner (24) besteht, der die relative Stellung in dem genannten Sehkreis des Betrachters bestimmt mit Bezug auf den gesamten, von den Kameras bedienten Raumwinkel, und zwar in einer von allen anderen Betrachtern unabhängigen Weise;
   einen Prozessor (23) zur Filterung der empfangenen Bildinformation und zum Mischen der empfangenen Audiokanalsignale entsprechend der durch den erwähnten Positioner vorgegebenen Koordinaten und zwar derart, dass der Betrachter nur die seiner Position entsprechenden Bild- und Tonfelder empfängt,
   ein Videosystem (16-22) mit einem Einzelmonitor (16) zur Bilderzeugung, mit Bildübertragunsmitteln (19, 20), einem Verschluss (21, 22), der die erzeugten Bilder entsprechend jedem Auge filtert und
   ein Audiosystem (26) zur Reproduktion des der genannten Position entsprechenden Tons.

2. Ein System nach Anspruch 1, dadurch gekennzeichnet, dass eine Mehrzahl von Mikrophonen (7) den Ton im gesamten 360° Bereich aufnimmt, deren Spuren in der Projektion derart gemacht werden, dass, in Übereinstimmung mit dem Blickpunkt des Betrachters, die Tonübermittlung derart erfolgt, dass sie mit dem Bild übereinstimmt unter frontaler Ausrichtung der Töne, die von dem durch den Betrachter betrachteten Bild kommen.

3. Ein System nach Anspruch 1 und 2, dadurch gekennzeichnet, dass der Helm für das Projizieren und Betrachten der Bilder und die Klangwiedergabe folgendes beinhaltet:

   einen Kopf-Positioner, der die Position des Helms in Bezug auf das zu projizierende Bild bestimmt,
   einen Augen-Positioner, der, in Übereinstimmung mit der Position der Augen, die Wahl der Bilder vornimmt, die in dem von den Augen nach dem Bild abgesuchten Bereich sichtbar sind.
   einen Augen-Konvergenz-Detektor, der die Kurz- und Langstrecken-Scharfeinstellung bestimmt,
   ein Horizontal-Ausrichtgerät, das dafür sorgt, dass die Projizierung der Bilder, unabhängig von der seitlichen Kopfneigung des Betrachters, immer vertikal erfolgt,
   einen Wahlschalter zum Einstellen und Hören von Mono- oder Stereoklang, unabhängig vom einem weiteren Wahlschalter für Mono-/Stereoskopik-Bild-Einstellung,
   Lichtverschlüsse (17, 18), mit der die Wahl der auf den genannten Einzelmonitor des Helms übermittelten Bilder für jeden der Gesichtspunkte eines jeden Auges bestimmt wird, bzw. mit Hilfe eines Empfangssystems für die auf den genannten Einzelmonitor projizierten und durch optische Glasfaser an jeden Betrachter übertragenen Bilder;
   der Bereich des projizierten Bildes (14) ist rund und etwas grösser als der der menschlichen Sicht;
   das optische System bzw. das der Bildübertragung basiert auf Refraktion oder Reflektion bzw. die Bildübertragung erfolgt durch optische Glasfaser.

4. Ein System nach Anspruch 1 und 2, dadurch gekennzeichnet, dass der Helm mit optischen Korrektur- und Einstellsystemen zur Anpassung an die Sichtentfernung des Betrachters ausgestattet ist.

5. Ein System nach Anspruch 1, dadurch gekennzeichnet, dass das digitalisierte Bild für eine mögliche Mischung mit anderen, durch den Computer erzeugten Bildern gefiltert wird.

6. Ein System nach Anspruch 1 und 3, dadurch gekennzeichnet, dass die sichtbaren Bilder (13) in Übereinstimmung mit jedem der möglichen Gesichtspnkte des Betrachters und der Neigung und Ausrichtung des Helms gemacht und/oder erzeugt werden.

7. Ein System nach Anspruch 1 und 3, dadurch gekennzeichnet, dass jedes Bilderpaar in jeder Sekunde auf dem Monitor (16) in der folgenden Sequenz wiedergegeben wird, wobei LI die Wiedergabe des mit dem linken Auge gesehenen Teiles und RI des mit dem rechten Auge gesehenen Teiles ist.

| PAARE (ungerade) 1 bis 25 | LI-RI-LI-RI |
| PAARE (gerade) 2 bis 24 | LI-RI-LI-RI |

und dies wird durch die gemeinsame Aktion der Lichtverschlüsse mit den folgenden Sequenzen gesehen, wobei LS linker Verschluss und RS rechter Verschluss bedeutet:

| PAARE (ungerade) 1 bis 25 | LI-RI-LI-RI | LS-RS-LS-RS |
| PAARE (gerade) 2 bis 24 | LI-RI-LI-RI | LS-RS-LS-RS |

8. Ein System nach Anspruch 3, dadurch gekennzeichnet, dass in einer möglichen Ausformung des Helms das Empfangssystem, der Daten-Prozessor, der Monitor, das optische System, die Lichtverschlüsse, das Audiosystem und das System für die Kopf- und Augenausrichtung untergebracht sind.

9. Ein System nach Anspurch 3, dadurch gekennzeichnet, dass in einer möglichen Ausformung des Helms ein Teil des optischen Systems, das Audiosystem und das Kopfausrichtsystem untergebracht sind, und dass sich an der Aussenseite des Helms der Monitor, das Empfangssystem, der Daten-Prozessor, die Lichtverschlüsse befinden, und dass diese gesamte Ausrüstung an den Helm angeschlossen ist.

10. Ein System nach Anspruch 3, dadurch gekennzeichnet, dass in einer möglichen Ausformung des Helms ein Teil des optischen Systems, das Audiosystem und das Kopfausrichtsystem untergebracht sind, und dass auf der Aussenseite des Helmes die Zentraleinheit angebracht ist, die aus so vielen Monitoren, Datenprozessoren, Lichtverschlüssen und Sende-und Empfangssystemen besteht wie es mögliche Betrachter gibt.

11. Ein System nach irgendeinem der Ansprüche 1, 2, 3 und 6, dadurch gekennzeichnet, dass die gewählten und empfangenen Bilder und Ton in Realzeit realisiert werden.

**Revendications**

1. Système intégral d'enregistrement, de transmission, de projection, d'images audiovisuelles réelles ou de combinaisons d'images réelles et d'images virtuelles du type de ceux qui projettent une image d'un point de vue de chaque oeil d'un spectateur dans un casque possédant des dispositifs permettant le visionnement d'images et muni d'auriculaires, le système comprenant:

une pluralité de dispositifs de réception, un pour chaque spectateur, des dispositifs d'enregistrement permettant l'enregistrement de l'image et comprenant au moins une caméra permettant l'enregistrement de photogrammes, chaque photogramme correspondant à un angle solide total visionné par au moins une des dites caméras qui couvre au moins 100 degrés jusqu'à un maximum de 360 degrés horizontalement et verticalement, et travaillant à un rythme minimum de 25 photogrammes par seconde, chaque photogramme étant digitalisé et chaque pixel digitalisé de l'image étant représenté par un photogramme résultant de la digitalisation à laquelle un code est assigné, qui indique la position qu'il doit occuper dans une sphère visuelle d'un spectateur par rapport à des coordonnées de référence,
des dispositifs de sauvegarde permettant de sauvegarder les valeurs des pixels digitalisés ainsi que les codes y associés,

des dispositifs de transmission permettant de transmettre le contenu des dispositifs de sauvegarde ou le contenu des dispositifs d'entreposage et des informations périphériques y associées qui représentent les types d'images de réalité virtuelle sus-indiquées, et qui permettent de transmettre des sons à travers les canaux audio, à chaque dispositif de réception,

chaque dispositif de réception associé à un spectateur comprenant:

un récepteur (25) permettant la réception de l'image transmise et l'information audio,
un casque y associé, muni d'un dispositif audiovisuel comprenant un positionneur de tête (24) qui détermine la position relative dans la dite sphère visuelle du spectateur par rapport au dit angle solide total couvert par les dites caméras, de sorte qu'il soit indépendant de tout autre spectateur,
un processeur (23) permettant de filtrer l'information visuelle reçue et permettant de mélanger les signaux du canal audio reçues, selon les coordonnées fournies par le dit positionneur de tête, de telle sorte que le dit spectateur ne reçoive que les champs audiovisuels correspondant à sa dite position relative
un dispositif de visionnement (16-22) muni d'un écran personnel (16) permettant de créer des images, un dispositif de transmission d'images (19,20), et un obturateur (21, 22) qui filtre les images créés qui correpondent à chaque oeil, et
un dispositif audio (26) permettant de reproduire le son qui correspond à la dite position relative.

2. Un dispositif, conformément à la revendication numéro 1, qui se caractérise par le fait que le son est enregistré par plusieurs microphones (7) qui déterminent le captage du son sur une surface de 360°, dont les pistes sont faites dans une projection telle, que selon soit le point de vue du spectateur, l'émission des dits sons se fait de sorte qu'ils coïncident avec l'image, avec ceux qui proviennent de la partie de l'image que le spectateur est en train d'observer lorsqu'il est placé frontalement à elle.

3. Un dispositif, conformément aux revendications 1 et 2, qui se caractérise par le fait que le casque de projection, de visionnement et de reproduction du son comprend:

un positionneur de tête (24) qui détecte la position du casque par rapport à l'image qui fait l'objet de la projection,
un positionneur d'oeil qui détermine, conformément à la position des yeux, la sélection des images visibles dans la zone où ceux-ci cherchent l'image,
un détecteur de convergence oculaire qui détermine le cadrage à courtes et longues distances,
un positionneur horizontal qui permet que la projection des images soit toujours verticale, indépendamment de l'inclinaison de la tête du spectateur,
un bouton pouvant être sélectionné à volonté permettant de sélectionner et d'écouter le son en mono ou en stéréo, séparé de tout autre sélecteur d'image mono/stéréoscopique pouvant être sélectionné à volonté
des obturateurs de lumière (17, 18) qui déterminent la sélection d'images sur chaque point de vue de chaque oeil qui sont transmises au dit écran unique situé dans le casque, ou au moyen d'un dispositif de réception des images projetées sur le dit écran unique et transmises par fibre optique à chacun des spectateurs;
le champ de l'image projetée (14) étant circulaire et quelque peu plus ample que celui de la vision humaine;
le système optique de celui qui sert à la transmission de l'image étant du type par réfraction ou par réflexion, ou bien qui réalise la transmission d'images au moyen de fibre optique.

4. Dispositif, conformément aux revendications 1 et 2, qui se caractérise par le fait quele casque possède une correction optique et des systèmes d'adaptation permettant de s'adapter à la distance oculaire du spectateur.

5. Dispositif, conformément à la revendication 1, qui se caractérise par le fait que l'image digitalisée est filtrée conformément au possible mélange avec d'autres images créées par ordinateur.

6. Dispositif, conformément aux revendications 1 et 3, qui se caractérise par le fait que les images qui sont visibles (13), sont faites ou créées conformément à chaque point de vue du spectateur, et selon l'inclinaison et l'orientation du casque.

7. Dispositif, conformément aux revendications 1 et 3, qui se caractérise par le fait que chaque paire d'images, à chaque seconde, est reproduite sur l'écran (16) dans la séquence suivante, LI étant la reproduction de la partie observée par l'oeil gauche et RI étant la partie observée par l'oeil droit.

| PAIRES (impair) 1 à 25 | LI-RI-LI-RI |
|---|---|
| PAIRES (pair) 2 à 24 | LI-RI-LI-RI |

et celle-ci est visionnée par l'action conjointe des obturateurs de lumièreconformément à la séquence suivante, LS étant l'obturateur gauche et RS étant l'obturateur droit:

| PAIRES (impair) 1 à 25 | LI-RI-LI-RI | LS-RS-LS-RS |
|---|---|---|
| PAIRES (pair) 2 à 24 | LI-RI-LI-RI | LS-RS-LS-RS |

8. Dispositif, conformément à la revendication 3, qui se caractérise par le fait que dans une possible configuration, le casque possède le système de réception, le processeur de données, l'écran, le système optique, les obturateurs de lumière, le système audio et le système permettant de positionner la tête et les yeux.

9. Dispositif, conformément à la revendication 3, qui se caractérise par le fait que dans une possible configuration, le casque possède une partie du système optique, le système audio et le système permettant de positionner la tête, et à l'extérieur du casque se trouvent l'écran, le système de réception, le processeur de données, les obturateurs de lumière, tout cet équipement étant raccordé au casque au moyen d'une connexion.

10. Dispositif, conformément à la revendication 3, qui se caractérise par le fait que dans une possible configuration, le casque possède une partie du système optique, le système audio et le système permettant de positionner la tête, et à l'extérieur du casque se trouve placée l'unité centrale, faite d'autant d'écrans, de processeurs de données, d'obturateurs de lumière,de systèmes d'émission et de réception, qu'il y a de possibles spectateurs.

11. Dispositif, conformément à n'importe laquelle des revendications 1, 2, 3 et 6, qui se caractérise par le fait que les images et les sons sélectionnés et obtenus sont réalisés en temps réel.

# Fig 1

45°

1

# Fig 2

2

**Fig 3**

**Fig 4**

# Fig 5

Fig 6

**Fig 7**

**Fig 8**

# Fig 9

# Fig 10

# Fig 11

# Fig 11 a

# Fig 12

# Fig 12 a

# Fig 13